Europäisches Patentamt

European Patent Office

Office européen des brevets

(11) Publication number: **0 393 795**
**A1**

## (12) EUROPEAN PATENT APPLICATION

(21) Application number: **90200982.8**

(22) Date of filing: **19.04.90**

(51) Int. Cl.5: **G01B 21/04, G01B 5/03**

(30) Priority: **21.04.89 NL 8901010**

(43) Date of publication of application:
**24.10.90 Bulletin 90/43**

(84) Designated Contracting States:
**AT BE CH DE DK ES FR GB GR IT LI LU NL SE**

(71) Applicant: **PELT & HOOYKAAS B.V.**
**1 Bijlstraat**
**NL-3087 AA Rotterdam(NL)**

(72) Inventor: **Hooykaas, Carel Willem Jan**
**44, Oranjelaan**
**NL-3062 BT Rotterdam(NL)**

(74) Representative: **van der Kloet-Dorleijn,**
**Geertruida W.F., Drs. et al**
**EXTERPATENT B.V. P.O. Box 90649**
**NL-2509 LP The Hague(NL)**

(54) **Three-dimensional measuring device.**

(57) A measuring device for determining or fixing the co-ordinates of a point on an object, in which the device is provided with a supporting face (2) for supporting the object, and a measuring probe (1) for determining the coordinates of a point, said measuring probe (1) being fitted in the lengthwise direction on a first supporting element (4) which can be moved by seans of a drive unit (10) and by guide means in the vertical direction along a second supporting element (6) which is situated in a plane at right angles to the first supporting element (4) and parallel to the supporting face (2) of the device, and in which the second supporting element (6) is provided with a drive unit (11) and with guide means to permit a displacement of the first supporting element (4) in a direction parallel to the supporting face (2), while the second supporting element (6) is connected at one end to a guide mechanism (7) in order to displace the measuring probe (1) in the plane parallel to the supporting face (2) and in the displacement direction of the guide mechanism (7), and the other end of said second supporting element (6) is supported by a vertical supporting rib (9), parallel to the first supporting element (4), and which is guided in the supporting face (2) of the device. The drives of the first supporting element (4) of the first supporting element along the second supporting element (6) and of the guide mechanism (7) work preferably in the respective displacements directions thereof.

## Three-dimensional measuring device.

The invention relates to a measuring device for determining or fixing the co-ordinates of a point on an object, in which the device is provided with a supporting face for supporting the object, and a measuring probe for determining the co-ordinates of a point, said measuring probe being fitted in the lengthwise direction on a first supporting element which can be moved by means of a drive unit and by guide means in the vertical direction along a second supporting element which is situated in a plane at right angles to the first supporting element and parallel to the supporting face of the device, and in which the second supporting element is provided with a drive unit and guide means to permit a displacement of the first supporting element in a direction parallel to the supporting face, while the second supporting element is connected at one end to a guide mechanism in order to displace the measuring probe in the plane parallel to the supporting face and in the direction of the guide mechanism.

Such a device is known.

However, in this known device both ends of the second supporting element are provided with guide mechanisms. These guide mechanisms are supported on supporting means in the form of gantries, and are therefore located relatively high up in the device. The disadvantage of this known measuring device is, however, that rapid determination of the co ordinates of a point of a three-dimensional object is not possible, due to the fact that the supporting face is not fully accessible in this device.

A three-dimensional measuring device which does not have this disadvantage, and by means of which the coordination of a point on an object can be determined very rapidly and with very great reproducibility, has now been found.

The invention therefore relates to a three-dimensional measuring device of the type mentioned in the preamble, which is characterized in that the other end of the second supporting element is supported by a vertical supporting rib, parallel to the first supporting element, and which is guided in the supporting face.

Such a measuring device therefore gives the advantage that an object can easily be placed on the supporting face, due to the fact that the supporting rib leaves the part of the supporting face along which it is guided substantially free, unlike the known device in which on either side of the supporting face two supporting elements extending over the entire width of the face are connected to said face.

It is pointed out that a three-dimensional measuring device is also known in which the guidance of the two gantries resting on the supporting face, for supporting and displacing the second supporting element, takes place in the supporting face. These two guides therefore lie relatively low down in the device. The disadvantage of such a device is, however, that an accurate determination of the co-ordinates is not possible because the drive for displacing the second supporting element parallel to the supporting face is exerted on the bottom part of both gantries provided with guide means, which promotes the occurrence of resonance phenomena in the device.

The drives of the first supporting element, of this first supporting element along the second supporting element, and of the guide mechanism preferably work directly in the respective displacement directions thereof.

By making the driving forces work solely in the respective displacement directions, a much more accurate movement, and therefore a more accurate determination of the co-ordinates of a point, is obtained, and this determination also has a greater reproducibility.

For the displacement of the first supporting element in the three measuring directions, kinematic preferably interact with the respective drive units. Such a coupling also ensures the balancing of the first supporting element and gives a considerable improvement of the dynamics by comparison with the known device discussed above, in which the balancing of the first supporting element is carried out under the influence of a counter weight.

The drive of the various moving parts of the device can be achieved with a mechanical drive.

The drive of the first supporting element along the second supporting element and of the guide mechanism is, however, preferably a magnetic drive. This permits a higher measuring speed than a mechanical drive.

The lowest eigenfrequency of the measuring device is preferably at least 15 Hz, and more particularly at least 19 Hz.

As is known, the lowest eigenfrequency of a device is a measure of the susceptibility to vibrations. As the value of this lowest eigenfrequency increases, the susceptibility to vibrations decreases. Of course, the value of the lowest eigenfrequency is also determined by the choice of the material used, and can therefore have a different value with the same design, but using different materials.

For the purpose of comparison, it is pointed out that a known measuring device of the type mentioned in the preamble has an eigenfrequency of only 6 Hz, while the eigenfrequency of a measuring device according to the invention is higher, and is preferably at least 15 Hz.

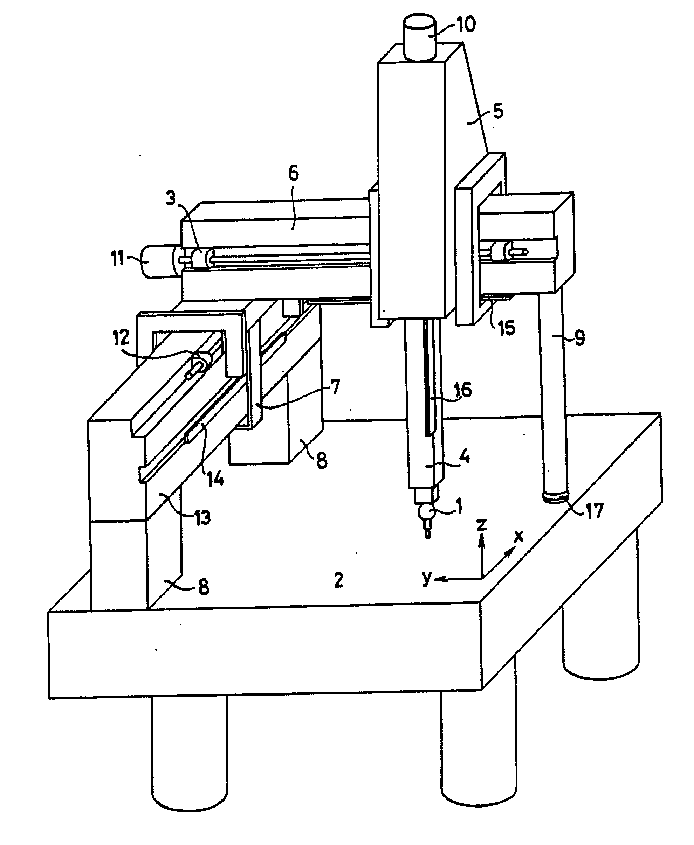

The invention is explained in greater detail with reference to the appended drawing, in which a three-dimensional measuring device according to the invention is shown schematically.

For determining or fixing the co-ordinates of a point on a three-dimensional object, said object is placed on the supporting face 2 of the measuring device. The measurement of the co-ordinates takes place by means of measuring probe 1. Said measuring probe 1 is fitted in the lengthwise direction on supporting element 4 which can be moved in the vertical direction in housing 5. The displacement of supporting element 4 is more particularly carried out by a drive unit 10, preferably a linear motor, being placed in line with the supporting element 4. A kinematic coupling (not shown) is preferably provided between this drive unit and the supporting element 4, which ensures that the supporting element is driven by the drive unit only in the displacement direction of the supporting element. Placing the drive unit 10 in line with the supporting element 4 leads to a better balancing of the supporting element and constitutes a considerable contribution to the higher lowest eigenfrequency which is obtained with the device according to the invention.

It is pointed out that the other drive units also interact with kinematic couplings (not shown).

As can be seen from the appended drawing, housing 5 can be moved in the horizontal direction along the second supporting element 6, which is also provided with guide means and with bearing blocks 3 and a drive unit 11. Here again, the drive therefore takes place in the displacement direction of the device to be displaced, in this case housing 5.

The second supporting element 6 is connected at one end to a guide mechanism 7 which makes it possible to displace the second supporting element, and therefore also the measuring probe 1, in the x-direction of the supporting face. The guide mechanism 7 is displaced by means of guide means and bearing blocks such as 12 over supporting element 13. This supporting element is connected by means of supporting means 8 to the supporting face 2 of the measuring device.

The second supporting element 6 is also supported at the other end by a vertical supporting rib 9 which is situated parallel to the first supporting element 4, therefore in the z-direction of the measuring device. The guidance of this supporting rib takes place at the bottom side 17 thereof and in the supporting face 2 of the device, but for simplification of the device it is not shown in any further detail. Of course, this guidance takes place parallel to that of guide mechanism 7. This supporting rib 9 is, however, not displaced directly by means, of a drive unit, but follows the movement of the second supporting element through the displacement thereof over supporting element 13.

It is pointed out that for the various guides in the device it is particularly expedient to use air bearings.

As already indicated above, the drive of the supporting element 4, of the first supporting element along the second supporting element 6, and of the guide mechanism 7 takes place in their respective displacement directions. The drive can take place more particularly in a mechanical manner, but it has been found particularly expedient to replace the mechanical drive by a magnetic drive. The measuring speed can then be clearly greater, while very great accuracy is maintained. More particularly, a reproducible measurement with an accuracy of 8 to 10 $\mu$m is obtained with the present measuring device.

It is pointed out that for determining the coordinates in x-, y- and z-direction the supporting element 13 is provided with an x measuring scale 14, the second supporting element 6 is provided with a y measuring scale 15, and the first supporting element 4 is provided with a z measuring scale 16.

It is also pointed out that the measuring device according to the invention is preferably made of granite. Other materials can, of course, also be used. Even then, due to the special design of the measuring device, a higher value for the lowest eigenfrequency than is the case with a measuring device of a conventional design is also obtained, as is explained above. It is pointed out that if the measuring device is made of granite, the lowest eigenfrequency is approximately 19 Hz. As already pointed out above, a known three-dimensional measuring device has a lowest eigenfrequency of 6 Hz.

It is also pointed out that supporting rib 9 need not be made of the same material as the other parts of the device; any material which has sufficient rigidity can be used for the supporting rib. Moreover, the supporting rib can be hollow if desired.

## Claims

1. Measuring device for determining or fixing the co-ordinates of a point on an object, in which the device is provided with a supporting face for supporting the object, and a measuring probe for determining the coordinates of a point, said measuring probe being fitted in the lengthwise direction on a first supporting element which can be moved by means of a drive unit and by guide means in the vertical direction along a second supporting element which is situated in a plane at right angles to the first supporting element and parallel to the supporting face of the device, and in which the second supporting element is provided with a drive unit and with guide means to permit a displacement of the first supporting element in a direction parallel to the supporting face, while the second supporting element is connected at one end to a guide mechanism in order to displace the measuring probe in the plane parallel to the supporting face and in the displacement direction of the guide mechanism, characterized in that the other end of the second supporting element (6) is supported by a vertical supporting rib (9), parallel to the first supporting element (4), and which is guided in the supporting face (2) of the device.

2. Measuring device according to Claim 1, characterized in that the drives of the first supporting element (4), of this first supporting element along the second supporting element (6), and of the guide mechanism (7) work directly in the respective displacement directions thereof.

3. Measuring device according to Claim 1 or 2, characterized in that for the displacement of the first supporting element (4) in the three measuring directions kinematic couplings interact with the respective drive units.

4. Measuring device according to Claim 1 or 2, characterized in that the drive of the first supporting element (4), of the first supporting element along the second supporting element (6), and of the guide mechanism (7) takes place in a magnetic manner.

5. Measuring device according to Claims 1 - 4, characterized in that the lowest eigenfrequency of the measuring device is at least 15 Hz, preferably at least 19 Hz.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 542 766 (MAUSER-WERKE OBERNDORFF GmbH) * Introduction; figures 1-3; column 3, lines 33-60 * | 1 | G 01 B 21/04 G 01 B 5/03 |
| X | DE-A-2 413 335 (KOMEG KÖORDINATEN-MESSMACHINEN GmbH) * Introduction; fig.; page 2, paragraph 3 - page 3 * | 1 | |
| P,X | EP-A-0 330 901 (WEGU-MESSTECHNIK GmbH) * Figures 1,2; column 5, lines 31-44 * | 1 | |
| P,X | EP-A-0 333 009 (MAUSER-WERKE OBERNDORF GmbH) * Figures 1-4; column 3, lines 21-38 * | 1 | |
| A | DE-A-3 720 795 (C. STIEFELMAYER KG) * Figures 1,2; column 6, lines 6-41; column 7, line 61 - column 9, line 66 * | 2,3 | |
| A | PATENT ABSTRACTS OF JAPAN, vol. 8, no. 223 (P-307)[1660], 12th October 1984; & JP-A-59 105 502 (MITSUTOYO SEISAKUSHO K.K.) 18-06-1984 | 1,5 | TECHNICAL FIELDS SEARCHED (Int. Cl.5) G 01 B |

The present search report has been drawn up for all claims

| Place of search | Date of completion of the search | Examiner |
|---|---|---|
| THE HAGUE | 20-07-1990 | VISSER F.P.C. |